# EUROPÄISCHE PATENTSCHRIFT

(11) **EP 4 544 248 B1**
(45) Veröffentlichungstag und Bekanntmachung des Hinweises auf die Patenterteilung: **15.04.2026**
(21) Anmeldenummer: 23768861.9
(22) Anmeldetag: 12.09.2023
(51) Int. Cl.: C04B 7/43

(54) **VERMEIDUNG VON EMISSIONEN BEI DER HERSTELLUNG KÜNSTLICHER PUZZOLANE AUS MINERALISCHEM MATERIAL, INSBESONDERE TONEN**
AVOIDING OF EMISSIONS IN THE PRODUCTION OF ARTIFICIAL POZZOLANS MADE OF MINERAL MATERIAL, IN PARTICULAR CLAYS
ÉVITEMENT D'ÉMISSIONS DANS LA PRODUCTION DE POUZZOLANES ARTIFICIELLES EN MATÉRIAU MINÉRAL, EN PARTICULIER DES ARGILES

(30) Priorität: 19.09.2022 LU 103008; 19.09.2022 DE 102022209826
(43) Veröffentlichungstag der Anmeldung: 30.04.2025
(73) Patentinhaber: thyssenkrupp Polysius GmbH, 59269 Beckum (DE); thyssenkrupp AG, 45143 Essen (DE)
(72) Erfinder: GRUND, Guido, 59457 Werl (DE); SCHEFER, Dirk, 59320 Ennigerloh (DE); FLASSPÖHLER, Melanie, 44141 Dortmund (DE); WAGNER, Eugen, 59457 Werl (DE)
(74) Vertreter: thyssenkrupp Intellectual Property GmbH
(86) Internationale Anmeldenummer: PCT/EP2023/074967
(87) Internationale Veröffentlichungsnummer: WO 2024/061688

(56) Entgegenhaltungen:
- EP-A1- 1 898 171
- EP-A1- 2 587 149
- WO-A1-2005/108891
- WO-A1-2012/082683
- US-A- 5 975 891

## Beschreibung

Die Erfindung betrifft eine Vorrichtung und ein Verfahren, mit denen eine Abgasbehandlung zur Umwandlung von Schadstoffen bereits innerhalb des Prozesses und damit ohne nachgelagerte Abgasbehandlung möglich ist, was wiederum den Energieverbrauch für eine Abgasbehandlung reduziert oder vermeidet.

Zunehmend werden Ersatzbrennstoffe verwendet, um primäre Rohstoffe, wie zum Beispiel Kohlenstaub zu ersetzen und so insbesondere einen Beitrag zur Klimaneutralität zu leisten. Ersatzbrennstoffe sind jedoch oftmals schwerer entzündlich und müssen auch aufgrund von gesetzlichen Vorgaben eine Mindestbrennzeit und eine Mindestbrenntemperatur aufweisen. Daher werden solche Ersatzbrennstoffe oftmals in seitlich an die eigentliche Behandlungsvorrichtung angesetzten Brennkammern verbrannt. Dieses hat den Vorteil einer möglichst direkten Verbindung zwischen Wärmeerzeugung in der Brennkammer und Wärmeverbrauch durch die Umsetzung in der Behandlungsvorrichtung.

Bei der Verbrennung von Heizstoffen entstehen beispielsweise Stickoxide, kurz zusammen gefasst unter NOₓ, sowie teilweise unverbrannte Kohlenwasserstoffe und Kohlenwasserstoff-haltige Verbindungen, hier und im Folgenden zur Vereinfachung (und unter Vernachlässigung weiterer Heteroatome) zusammengefasst unter CₓH_{y}. NOₓ kann entweder nicht-katalytisch(SNCR) oder katalytisch (SCR) insbesondere mit Ammoniak NH₃ oder Harnstoff zu Stickstoff umgesetzt werden. Kohlenwasserstoff CₓH_{y} kann mit Sauerstoff zu Wasser und Kohlendioxid umgesetzt werden. Für diese Umsetzung ist ein Temperaturfenster von über 800 °C sinnvoll. Daher ist es in der Abgasbehandlung üblicherweise notwendig, die vergleichsweise kalten Abgase wieder zu erwärmen, was Energie verbraucht und oftmals zusätzliche Wärmetauscher notwendig macht.

Aus der DE 10 2011 014 498 A1 ist ein Verfahren zur Herstellung eines Klinkerersatzstoffes bekannt.

Aus der US 9 458 059 B2 ist ein Herstellungsprozess für synthetische Puzzolane bekannt.

Aus der WO 2012 / 082 683 A1 ist ein Verfahren zur Herstellung künstlicher Puzzolane bekannt.

Aus der WO 2005 / 108 891 A1 ist eine Anlage und ein Verfahren zur Herstellung von Zementklinker.

Aus der EP 2 587 149 A1 ist ein Verfahren und eine Vorrichtung zur Reduktion von NOₓ aufweisenden Gasen in Abgasen eines Drehrohrofens bekannt.

Aus der EP 1 898 171 A1 ist die Temperaturkontrolle eines Calcinators bekannt.

US 5 975 891 A offenbart einen Ofen zur Wärmebehandlung von Rohstoffen und ist in mindestens drei getrennte Brennzonen unterteilt. Einer dieser Zonen wird eine Brennstoffmenge (c) zusammen mit sauerstoffhaltigem Gas zugeführt; einer zweiten Zone wird eine Brennstoffmenge (b) zusammen mit stickstoffhaltigen Gasen aus den beiden anderen Zonen zugeführt, und die entstehenden Abgase werden aus der Anlage abgeleitet; die dritte Zone wird mit einer Brennstoffmenge (a) zusammen mit sauerstoffhaltigem Gas und mindestens einem Teil des Rohmaterials versorgt.

Aufgabe der Erfindung ist es, bei der Abgasbehandlung Energie zu sparen, und so weitere CO₂-Emissionen, beispielsweise aus der Verbrennung von Brennstoffen als Wärmequelle, zu vermeiden.

Gelöst wird diese Aufgabe durch die Vorrichtung mit den in Anspruch 1 angegebenen Merkmalen sowie durch das Verfahren mit den in Anspruch 20 angegebenen Merkmalen. Vorteilhafte Weiterbildungen ergeben sich aus den Unteransprüchen, der nachfolgenden Beschreibung sowie der Zeichnung.

Die erfindungsgemäße Vorrichtung dient zur thermischen Behandlung beispielsweise und insbesondere von mineralischem Material, insbesondere Tonen, zur Herstellung von künstlichen Puzzolanen als Zusatzstoff für Zementklinker. Tone haben sich zunehmend als wichtiger Rohstoff in der Zementindustrie etabliert, da bei deren thermischer Behandlung weniger oder kein CO₂ aus dem Rohstoff freigesetzt wird, wie dieses beispielsweise beim Brennen von Kalkstein geschieht. Da die Temperatur für die Aktivierung mineralischer Materialien, insbesondere Tone, jedoch häufig unter 800 °C liegen kann, reicht die Temperatur innerhalb des Calcinators nicht aus, um Schadstoffe zuverlässig umzusetzen. Die Vorrichtung weist wenigstens einen Vorwärmer, einen Calcinator und einen Materialkühler auf. Der Vorwärmer ist beispielsweise als Gleichstromwärmetauscher mit Zyklonabscheider oder als Kaskade aus zwei bis sechs Gleichstromwärmetauschern mit Zyklonabscheider ausgebildet. Alternativ kann der Vorwärmer auch als Kreuzstromwärmetauscher ausgebildet sein. Der Materialkühler ist ebenfalls bevorzugt als Gleichstromwärmetauscher mit Zyklonabscheider oder als Kaskade aus zwei bis sechs Gleichstromwärmetauschern mit Zyklonabscheider ausgebildet. Alternativ kann der Materialkühler auch als Kreuzstromwärmetauscher ausgebildet sein. Ein Feststoffstrom wird in den Vorwärmer, vom Vorwärmer in den Calcinator, vom Calcinator in den Materialkühler und aus dem Materialkühler herausgeführt. Im Gegenstrom dazu wird ein Gasstrom in den Materialkühler, vom Materialkühler in den Calcinator, vom Calcinator in den Vorwärmer und aus dem Vorwärmer herausgeführt. Die Vorrichtung weist eine Brennkammer auf. Der Gasstrom aus dem Materialkühler wird zumindest teilweise durch die Brennkammer in den Calcinator geführt. Es kann einen weiteren Teilstrom geben, der beispielsweise direkt vom Materialkühler in den Calcinator geführt wird, es also einen Brennkammerbypass gibt. In der Brennkammer wird durch die Verbrennung von Erdgas, Wasserstoff, Kohle, Ammoniak oder Ersatzbrennstoffen, wie zum Beispiel Biomasse, Altreifen oder Hausmüll, die für den Prozess notwendige thermische Energie bereitgestellt. Derartige Anlagen sind für die thermische Behandlung von mineralischen Stoffen, insbesondere Tonen, bekannt.

Erfindungsgemäß ist nun zwischen der Brennkammer und dem Calcinator eine Verweilzeitvorrichtung angeordnet womit die Brennkammer außerhalb des Feststoffstromes angeordnet ist. In der Brennkammer entstehen Schadstoffe, beispielsweise NOₓ bei den Temperaturen der Verbrennung. Ebenso können hier Kohlenwasserstoffe und Kohlenwasserstoff-haltige Verbindungen aus dem Brennmaterial austreten. Insbesondere bei Verwendung von Ersatzbrennstoffen kann dieses ein relevantes Thema sein. Üblicherweise ist die Brennkammer entweder innerhalb des Calcinators angeordnet, beispielsweise im Falle einer Erdgasbefeuerung oder direkt an dem Calcinator angeordnet, insbesondere für Ersatzbrennstoffe. Die direkte Verbindung sorgt zum einen für die Vermeidung von Wärmeverlusten und spart zusätzlich Investitionskosten und Bauraum. Damit wird die Wärme möglichst dicht an dem Ort erzeugt, an dem diese für die gewollte Umsetzung benötigt wird. Gleichzeitig wird hierdurch eine höhere Temperaturkonstanz im Bereich der Umsetzung auf einfache Weise erreicht. Daher erscheint es zunächst nicht vorteilhaft, die Brennkammer und den Calcinator räumlich zu trennen und dazwischen eine Verweilzeitvorrichtung anzuordnen und so die Brennkammer eben deutlich getrennt vom Feststoffstrom und damit vom Ort der Energiesenke der Umsetzung anzuordnen. Jedoch ist es hierdurch möglich, eine Behandlung der Abgase aus der Brennkammer auf einem idealen Temperaturniveau vorzunehmen und sich so eine nachträgliche und energieintensive Abgasbehandlung zu sparen. Zudem erfolgt die Behandlung der Abgase getrennt vom Feststoffstrom und bevor die heißen Abgase auf den Feststoffstrom treffen. Durch die Verweilzeitvorrichtung kann eine Trennung der Temperaturen für die Abgasbehandlung in der Verweilzeitvorrichtung und der thermischen Behandlung, beispielsweise des Tones, im Calcinator erreicht werden, wodurch sowohl für die Abgasbehandlung als auch für die thermische Behandlung jeweils ein geeignetes Temperaturfenster gewählt werden können. Insbesondere kann die Temperatur in der Verweilzeitvorrichtung höher gewählt werden als im Calcinator, sodass hier eine Verbrennung von CₓH_{y} insbesondere mit Sauerstoff erfolgen kann oder bei Anwesenheit von beispielsweise Ammoniak NOₓ durch Synproportionierung von NOₓ und NH₃ zu Stickstoff (und Wasser) umgesetzt werden kann. Die Art der Schadstoffe ist üblicherweise sehr stark von der Art des verwendeten Brennstoffs abhängig.

Auch die Verweilzeitvorrichtung ist bevorzugt vollständig außerhalb des Feststoffstromes angeordnet, wobei an der Verbindung zwischen der Verweilzeitvorrichtung und dem Calcinator ein gewisses Maß an Rückvermischung naturgemäß nicht ausschließbar ist. Der Nettogasstrom ist jedoch vollständig von der Brennkammer zum Calcinator gerichtet.

In einer weiteren Ausführungsform der Erfindung ist zwischen der Brennkammer und der Verweilzeitvorrichtung und/oder in der Verweilzeitvorrichtung eine Hilfsbrennvorrichtung angeordnet. Diese Ausführungsform ist bevorzugt, wenn die Brennkammer zur Verbrennung von Ersatzbrennstoffen ausgebildet ist. Ersatzbrennstoffe weisen üblicherweise eine größere Schwankung des Brennwertes auf. Die Hilfsbrennvorrichtung ist bevorzugt zur Verbrennung eines Brennstoffes ausgebildet, der eine schnelle und gezielt anpassbare Verbrennung ermöglicht. Die Hilfsbrennvorrichtung ist bevorzugt dazu ausgebildet einen Brennstoff zu verbrennen, der ausgewählt ist aus der Gruppe umfassend Kohlenstaub, Erdgas, Wasserstoff, Biogas und Ammoniak. Somit ist es möglich, Temperaturschwankungen, die durch Schwankungen des Brennmaterials in der Brennkammer entstehen, gezielt und schnell auszugleichen, sodass in der Verweilzeitvorrichtung eine stabile Temperatur gewährleistet ist und somit der Prozess des Schadstoffabbaus zuverlässig erfolgt.

In einer weiteren Ausführungsform der Erfindung ist die Verweilzeitvorrichtung rohrförmig ausgebildet. Beispielsweise kann die rohrförmige Verweilzeitvorrichtung schwanenhalsförmig ausgebildet sein. Ebenso kann die rohrförmige Verweilzeitvorrichtung als aufgeweitete Rohrleitung ausgebildet sein. Die Verweilzeitvorrichtung kann optional mit einem oder mehreren Strömungseinbauten ausgestattet sein, die eine intensive Vermischung des Gases innerhalb der Einrichtung zu verbessern.

In einer weiteren Ausführungsform der Erfindung ist zwischen der Brennkammer und der Verweilzeitvorrichtung eine erste Reaktionsmittelzuführung angeordnet. Die Reaktionsmittelzuführung dient dazu, ein Reaktionsmittel zur Schadstoffumsetzung zuzuführen. Da die zu behandelnden Schadstoffe sehr stark von dem in der Brennkammer verbrannten Brennstoff abhängig sind, ist das Reaktionsmittel und damit die erste Reaktionsmittelzuführung in Abhängigkeit des in der Brennkammer zu verwendenden Brennstoffs auszuwählen.

In einer weiteren Ausführungsform der Erfindung ist die erste Reaktionsmittelzuführung zur Zuführung von Sauerstoff, beispielsweise auch in Form von Luft oder von im Materialkühler vorgewärmter Luft, ausgebildet. Sauerstoff wird als Reaktionspartner für die Umsetzung von Kohlenwasserstoff CₓH_{y} zu Wasser und Kohlendioxid benötigt.

In einer weiteren Ausführungsform der Erfindung ist die erste Reaktionsmittelzuführung zur Zuführung von verschiedenen Arten von Reduktionsmittel, beispielsweise Ammoniak, Harnstoff, deren Verbindungen oder Lösungen, insbesondere wässrige Lösungen, hieraus ausgebildet. Ammoniak oder Harnstoff können mit Stickoxiden NOₓ zu Stickstoff synproportionieren.

In einer weiteren Ausführungsform der Erfindung weist die Vorrichtung wenigstens einen ersten NOₓ-Analysator auf. Der NOₓ-Analysator dient zur Erfassung der NOₓ-Konzentration. Üblicherweise wird als NOₓ-Analysator eine Vorrichtung unter Nutzung der Infrarot-Spektroskopie verwendet. Der wenigstens eine erste NOₓ-Analysator ist in einer Ausführungsform in der Verweilzeitvorrichtung oder zwischen der Verweilzeitvorrichtung und dem Calcinator angeordnet. Dieses hat den Vorteil einer unmittelbaren Rückmeldung und schnelleren Regelbarkeit. Zusätzlich oder alternativ kann der wenigstens eine erste oder ein zweiter NOₓ-Analysator im oder hinter dem Vorwärmer angeordnet sein. Der Vorteil dieser Ausführungsform ist, dass die Gase hier deutlich kühler sind, was die Messung vereinfacht. Der wenigstens eine erste oder ein zweiter NOₓ-Analysator kann auch nach dem Calcinator oder sogar nach dem Vorwärmer angeordnet sein, da in diesen die Temperatur zu Bildung von NOₓ nicht mehr hoch genug sein sollte, sodass somit auch dieser Wert für den NOₓ-Gehalt in der Verweilzeitvorrichtung aussagekräftig ist.

In einer weiteren Ausführungsform der Erfindung weist die Vorrichtung wenigstens einen ersten NH₃-Analysator auf. Der NH₃-Analysator dient zur Erfassung der NH₃-Konzentration im Gasstrom. Vorzugsweise werden mehrere NH₃-Analysatoren eingesetzt, um die Konzentration an unterschiedlichen Stellen im Wege des Abgasstroms zu ermitteln. Der beziehungsweise die wenigsten zwei NH₃-Analysaten befinden sich beispielsweise in unterschiedlichen Ebenen des Calcinators und regeln/steuern die Zugabe des Reaktionsmittels, um die Ausnutzung des Reaktionsmittels zu ermitteln und somit eine effektive Nutzung des Reaktionsmittels sicherzustellen. Der wenigstens eine NH₃-Analysator, vorzugsweise die wenigstens zwei NH₃-Analysatoren, befinden sich beispielsweise und bevorzugt in räumlicher Nähe des wenigstens einen NOₓ-Analysators und/oder wenigstens einen Temperatursensors. Der beziehungsweise die NH₃-Analysatoren sind über wenigstens ein Dosiersystem mit entsprechenden Behältern, bevorzugt mit wenigstens einem Behälter für Ammoniak verbunden. So kann beispielsweise Ammoniak an unterschiedlichen Stellen und/oder Ebenen in gleicher oder unterschiedlicher Menge und/oder Konzentration in den Gasstrom eingedüst werden.

In einer weiteren Ausführungsform der Erfindung weist die Vorrichtung wenigstens eine erste Steuervorrichtung auf. Die wenigstens eine erste Steuervorrichtung ist zum Auslesen des wenigstens einen ersten NOₓ-Analysators ausgebildet. Die wenigstens eine erste Steuervorrichtung ist zum Ansteuern der ersten Reaktionsmittelzuführung ausgeführt und/oder einer optionalen zweiten Reaktionsmittelzuführung in Abhängigkeit von dem, durch wenigstens einen ersten NOₓ-Analysator, erfassten NOₓ-Wert ausgebildet und regelt die erste Reaktionsmittelzuführung und/oder die optionale mindestens eine weitere Reaktionsmittelzuführung, vorzugsweise in unterschiedlichen Ebenen und/oder mit mehreren Düsen, in Abhängigkeit des erfassten NOₓ-Wertes. Hierdurch ist eine gezielte Zugabe des Reaktionsmittels, beispielsweise von Ammoniak, möglich, wodurch wiederum eine Überdosierung des Reaktionsmittels und damit verbunden eine Emission von beispielsweise Ammoniak vermieden werden kann.

In einer weiteren Ausführungsform der Erfindung weist die Vorrichtung wenigstens eine erste Steuervorrichtung auf. Die wenigstens eine erste Steuervorrichtung ist zum Auslesen des wenigstens einen ersten NH₃-Analysators ausgebildet. Die wenigstens eine erste Steuervorrichtung ist zum Ansteuern der ersten Reaktionsmittelzuführung und/oder mindestens einer weiteren Reaktionsmittelzuführung in Abhängigkeit von dem, durch wenigstens einen ersten NH₃-Analysator, erfassten NH₃-Wertes ausgebildet und regelt die erste Reaktionsmittelzuführung und/oder die mindestens eine optionale zweite Reaktionsmittelzuführung in Abhängigkeit des erfassten NH3-Wertes. Hierdurch ist eine gezielte Zugabe des Reaktionsmittels, beispielsweise von Ammoniak, möglich, wodurch wiederum eine Überdosierung des Reaktionsmittels und damit verbunden eine Emission von beispielsweise Ammoniak vermieden werden kann.

In einer weiteren Ausführungsform der Erfindung weist die Vorrichtung einen Temperatursensor auf. Temperatursensor ist im Sinne der Erfindung weit zu verstehen und umfasst jedes Sensorsystem zur Temperaturerfassung. Der Temperatursensor kann ein Thermoelement sein. Alternativ kann ein Temperatursensor auch ein akustischer Sensor sein, welcher die Temperatur über eine räumliche Strecke mittels der Schallgeschwindigkeit ermittelt. Bevorzugt ist der Temperatursensor in der ersten Brennkammer, in der Verweilzeitvorrichtung oder zwischen der Brennkammer und der Verweilzeitvorrichtung angeordnet. Die Vorrichtung kann auch mehrere Temperatursensoren, insbesondere an den vorgenannten Positionen aufweisen.

In einer weiteren Ausführungsform der Erfindung weist die Vorrichtung wenigstens eine erste Steuervorrichtung auf. Die wenigstens eine erste Steuervorrichtung ist zum Auslesen des Temperatursensors oder der Temperatursensoren ausgebildet. Die wenigstens eine erste Steuervorrichtung ist zum Ansteuern der ersten Reaktionsmittelzuführung und/oder einer mindestens optionalen zweiten Reaktionsmittelzuführung und/oder der Hilfsbrennvorrichtung in Abhängigkeit der von dem Temperatursensor erfassten Temperatur ausgebildet. Hierdurch ist eine gezielte Zugabe eines Brennstoffs möglich, wodurch wiederum eine exakte Anpassung der Temperatur an das gewünschte Temperaturfenster möglich ist.

In einer weiteren Ausführungsform der Erfindung ist die erste Reaktionsmittelzuführung für eine Zuführung mit einem Druck von 0,5 bar bis 5 bar ausgelegt.

In einer weiteren Ausführungsform der Erfindung ist benachbart zur erste Reaktionsmittelzuführung eine erste Wasserzuführung angeordnet. Die Wassereindüsung durch die Wasserzuführung kann zur gezielten Temperatureinstellung genutzt werden, um das Temperaturniveau für die Schadstoffminimierung optimal einzustellen. Die Wasserzuführung dient üblicherweise nicht nur zur Zuführung von Wasser, üblicherweise werden wässrige Lösungen, insbesondere Prozessabwässer, verwendet, welche zusätzlich weitere Stoffe aufweisen können. Vorzugsweise ist der Brennwert der weiteren Stoffe nicht so hoch, dass dadurch der Kühleffekt, welcher durch die Verdunstung des Wassers entsteht, kompensiert wird. So können beispielsweise wässrige Lösungen mit einem Anteil organischer Verbindungen hier eingesetzt werden, da die organischen Verbindungen bei den herrschenden Bedingungen sicher umgesetzt werden.

In einer weiteren Ausführungsform der Erfindung weist die Vorrichtung wenigstens eine erste Steuervorrichtung auf. Die wenigstens eine erste Steuervorrichtung ist zum Auslesen des Temperatursensors oder der Temperatursensoren ausgebildet. Die wenigstens eine erste Steuervorrichtung ist zum Ansteuern der Wasserzuführung in Abhängigkeit der von dem Temperatursensor erfassten Temperatur ausgebildet. Hierdurch ist eine gezielte Anpassung der Temperatur an das gewünschte Temperaturfenster möglich.

In einer weiteren Ausführungsform der Erfindung weist die Verweilzeitvorrichtung eine Länge auf, sodass die Verweilzeit in der Verweilzeitvorrichtung zwischen 0,5 s und 10 s, insbesondere zwischen 1 s und 5 s, besonders bevorzugt von 1,5 s bis 2,5 s, liegt. Hierdurch wird ein geeignetes Fenster zwischen ausreichend Reaktionszeit sowie Wärmeverlust und Strömungswiderstand erreicht.

In einer weiteren Ausführungsform der Erfindung ist zwischen dem Calcinator und dem Materialkühler eine Reduktionsvorrichtung angeordnet. Eine Reduktionsvorrichtung dient zur Behandlung des thermisch behandelten Materials in einer reduzierenden Atmosphäre insbesondere zur Farboptimierung. Zur Bildung der reduzierenden Atmosphäre können beispielsweise Gase, Feststoffe und/oder Flüssigkeiten eingesetzt werden, die beispielsweise Kohlenstoff, Wasserstoff, Stickstoff, Kohlenmonoxid oder dergleichen oder entsprechende Verbindungen hieraus, beispielsweise Methan oder Ammoniak oder Mischungen hieraus sowie zusätzlich auch Inertgase, insbesondere Stickstoff, aufweisen. Die reduzierende Atmosphäre kann auch durch eine unterstöchiometrische Verbrennung (Unterschuss an Sauerstoff) erzeugt werden. Beispielsweise kann dadurch Fe^{III} zu Fe^{II} reduziert werden, was eine Farbreduktion des Produkts und damit eine erhöhte Marktakzeptanz zur Folge hat.

In einer weiteren Ausführungsform der Erfindung weist die Verweilzeitvorrichtung einen Katalysator auf. Der Katalysator ist beispielsweise ein Platin-Rhodium-Katalysator, welcher für die Umsetzung von NOₓ und NH₃ zu Stickstoff geeignet ist.

In einer weiteren Ausführungsform der Erfindung weist die Verweilzeitvorrichtung wenigstens eine Umlenkung auf. Alternativ oder zusätzlich weist die Verweilzeitvorrichtung Strömungseinbauten zur Gasmischung auf. Insbesondere kann die Verweilzeitvorrichtung schwanenhalsförmig ausgeführt sein. Neben der kompakten räumlichen Anordnung führen die Umlenkungen zu einer Durchmischung. Zusätzlich können hierdurch auch Höhenunterschiede ausgeglichen werden, was eine kompakte Bauweise begünstigt.

In einer weiteren Ausführungsform der Erfindung weist die Verweilzeitvorrichtung wenigstens eine zweite Reaktionsmittelzuführung auf. Die wenigstens zweite Reaktionsmittelzuführung ist zwischen der Brennkammer und der Verweilzeitvorrichtung oder an der Verweilzeitvorrichtung angeordnet und bevorzugt mit einer optionalen Steuereinrichtung verbunden. In einem ersten Fall sind die erste Reaktionsmittelzuführung und die wenigstens zweite Reaktionsmittelzuführung zur Zuführung des gleichen Reaktionsmittels ausgebildet. Beispielsweise können beide zur Zuführung von Ammoniak ausgebildet sein. Insbesondere sind somit die erste Reaktionsmittelzuführung und die wenigstens zweite Reaktionsmittelzuführung zueinander beabstandet. Dadurch kann die Konzentration, beispielsweise des Ammoniaks zum NOₓ-Abbau, konstanter gehalten werden. In einem zweiten Fall dient die erste Reaktionsmittelzuführung zur Zuführung eines ersten Reaktionsmittels, beispielsweise NH₃ für den NOₓ-Abbau, und die wenigstens zweite Reaktionsmittelzuführung zur Zuführung von wenigstens eines zweiten Reaktionsmittels, beispielsweise O₂ oder Luft für den CₓH_{y}-Abbau.

In einer weiteren Ausführungsform der Erfindung weist die Vorrichtung einen SCR-Reaktor auf, wobei der SCR-Reaktor im Gasstrom hinter dem Vorwärmer angeordnet ist. Der SCR-Reaktor kann insbesondere als Backup-Lösung verwendet werden. Solange die erfindungsgemäße NOₓ-Minderung ausreichend ist, wird der SCR-Reaktor beispielsweise nicht betrieben und damit die notwendige Energie eingespart.

In einer weiteren Ausführungsform der Erfindung weist die Vorrichtung einen Bypass auf, wobei der Bypass zwischen der Brennkammer und dem Calcinator angeordnet ist. Der Bypass ist strömungstechnisch parallel zur Verweilzeitvorrichtung angeordnet. Somit wird ein erster Teilstrom durch die Verweilzeitvorrichtung geführt und ein zweiter Teilstrom wird durch den Bypass geführt. Hierdurch ist eine optimale Ausnutzung der zulässigen Emissionen möglich.

In einem weiteren Aspekt betrifft die Erfindung ein Verfahren zum Betreiben einer erfindungsgemäßen Vorrichtung. Die Temperatur wird in der Verweilzeitvorrichtung zwischen 750 °C und 1300 °C gewählt. Insbesondere wird die Temperatur in der Verweilzeitvorrichtung zwischen 800 °C und 1100 °C, besonders bevorzugt zwischen 900 °C und 1050 °C, gewählt.

In einer weiteren Ausführungsform der Erfindung erfolgt eine thermische Behandlung von mineralischem Material, insbesondere Tonen oder tonartigen Substanzen.

Nachfolgend ist die erfindungsgemäße Vorrichtung anhand eines in der Zeichnung dargestellten Ausführungsbeispiels näher erläutert.

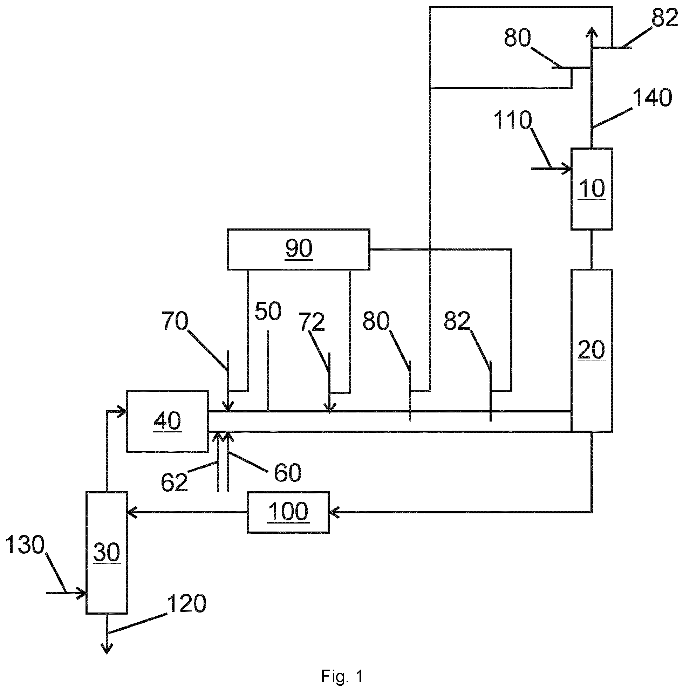

### Fig. 1 Vorrichtung

In Fig. 1ist eine beispielhafte Vorrichtung schematisch dargestellt. Das zu behandelnde Material, zum Beispiel ein Ton, wird über eine Materialzuführung 110 dem Vorwärmer 10 zugeführt, vorgewärmt in den Calcinator 20 eingebracht, dort thermisch behandelt. Vom Calcinator 20 das Material in eine optionale Reduktionsvorrichtung 100, wird dort insbesondere farboptimiert und gelangt in den Materialkühler 30, aus dem dann das fertige Produkt über eine Produktentnahme 120 entnommen wird. Im Gegenstrom wird das Gas über eine Gaszufuhr 130 zunächst in den Materialkühler 30 geführt und dort durch das abzukühlende Produkt erwärmt. Das erwärmte Gas gelangt in die Brennkammer 40. Dort wird beispielsweise ein Ersatzbrennstoff, zum Beispiel Müll, verbrannt. Bei der Verbrennung können alleine aufgrund der Temperatur und der Anwesenheit von Stickstoff und Sauerstoff Stickoxide entstehen. Brennkammer (40) und Verweilzeitvorrichtung (50) sind bevorzugt mit Temperatursensoren ausgestattet. Des Weiteren sind die Gase beim Verlassen der Brennkammer 40 am heißesten, sodass sich dieser Zeitpunkt ideal eignet, um die Stickoxide wieder zu zersetzen. Um Schwankungen im Brennwert des Sekundärbrennstoffes auszugleichen, weist die Vorrichtung eine Hilfsbrennvorrichtung 60 (optional mehrere Hilfsbrennvorrichtungen 60) auf, welche beispielsweise mit Gas, flüssigem Brennstoff oder Kohlestaub betrieben wird und damit in der Lage ist, zuverlässig die Temperatur einzustellen. Zusätzlich weist die Anlage eine Wasserzuführung 62 auf, mit welcher Wasser zugeführt und damit die Temperatur in einfacher Weise gesenkt werden kann. Durch die Kombination aus Hilfsbrennvorrichtung 60 und Wasserzuführung 62 ergibt sich somit die Möglichkeit einer besonders gezielten Temperatureinstellung. Zusätzlich wird über eine erste Reaktionsmittelzuführung 70 eine Ammoniaklösung eingedüst. Dadurch kann in der Verweilzeitvorrichtung 50 eine Reaktion zwischen NOₓ und NH₃ bei beispielsweise 1000 °C stattfinden. Um die Umsetzung vollständig zu machen und nicht einen Überschuss an Ammoniak zu erzeugen (und so eine neue Schadstoffquelle einzuführen), weist die Vorrichtung noch eine zweite Reaktionsmittelzuführung 72 auf, in der an einer späteren Stelle in der Verweilzeitvorrichtung 50 erneut Ammoniaklösung eingedüst wird. Zusätzlich sind in der Verweilzeitvorrichtung ein NOₓ-Analysator 80 und ein NH₃-Analysator (82) angeordnet. Zusätzlich sind nach dem Vorwärmer ein NOₓ-Analysator 80 und ein NH₃-Analysator (82) angeordnet. Die NOₓ-Analysatoren 80 und die NH₃-Analysatoren (82) sind mit einer ersten Steuervorrichtung 90 verbunden, die in Abhängigkeit des vom NOₓ-Analysator 80 erfassten NOₓ-Gehalt und des vom NH₃-Analysator erfassten NH₃-Gehalt sowie des über Temperatursensoren erfassten Temperaturniveaus die Eindüsung von Ammoniaklösung durch die erste Reaktionsmittelzuführung 70 und die zweite Reaktionsmittelzuführung 72 regelt. Von dort gelangt das warme Gas, aber von NOₓ befreit und mit nur geringen Gehalten an NH₃, in den Calcinator 20. Der Calcinator kann bei gewissen Produkten beispielsweise bei 750 °C betrieben werden, was wiederum zu gering wäre, um NOₓ innerhalb des Calcinators 20 umzusetzen. Vom Calcinator 20 wird das Gas in den Vorwärmer 10 geführt, wo dieses seine Wärme an das zugeführte Material abgibt. Das Abgas des Vorwärmers 10wird dann über einen Gasablass 140 abgegeben und kann beispielsweise einer weiteren Behandlung, beispielsweise zur Entstaubung, zugeführt werden.

### Bezugszeichen

- 10: Vorwärmer
- 20: Calcinator
- 30: Materialkühler
- 40: Brennkammer
- 50: Verweilzeitvorrichtung
- 60: Hilfsbrennvorrichtung
- 62: Wasserzuführung
- 70: erste Reaktionsmittelzuführung
- 72: zweite Reaktionsmittelzuführung
- 80: NOₓ-Analysator
- 82: NH₃-Analysator
- 90: Steuervorrichtung
- 100: Reduktionsvorrichtung
- 110: Materialzuführung
- 120: Produktentnahme
- 130: Gaszufuhr
- 140: Gasablass

## Patentansprüche

1. Vorrichtung zur thermischen Behandlung von mineralischen Materialien, wobei die Vorrichtung wenigstens einen Vorwärmer (10), einen Calcinator (20) und einen Materialkühler (30) aufweist, wobei ein Feststoffstrom in den Vorwärmer (10), vom Vorwärmer (10) in den Calcinator (20), vom Calcinator (20) in den Materialkühler (30) und aus dem Materialkühler (30) heraus geführt wird, wobei ein Gasstrom in den Materialkühler (30), vom Materialkühler (30) in den Calcinator (20), vom Calcinator (20) in den Vorwärmer (10) und aus dem Vorwärmer (10) heraus geführt wird, wobei die Vorrichtung eine Brennkammer (40) aufweist, wobei der Gasstrom aus dem Materialkühler (30) zumindest teilweise durch die Brennkammer (40) in den Calcinator (20) geführt wird, **dadurch gekennzeichnet, dass** zwischen der Brennkammer (40) und dem Calcinator (20) eine Verweilzeitvorrichtung (50) angeordnet ist, womit die Brennkammer (40) außerhalb des Feststoffstromes angeordnet ist.

2. Vorrichtung nach Anspruch 1, **dadurch gekennzeichnet, dass** zwischen der Brennkammer (40) und der Verweilzeitvorrichtung (50) und/oder in der Verweilzeitvorrichtung (50) eine wenigstens eine Hilfsbrennvorrichtung (60) angeordnet ist.

3. Vorrichtung nach einem der vorstehenden Ansprüche, **dadurch gekennzeichnet, dass** zwischen der Brennkammer (40) und der Verweilzeitvorrichtung (50) eine erste Reaktionsmittelzuführung (70) angeordnet ist.

4. Vorrichtung nach Anspruch 3, **dadurch gekennzeichnet, dass** wenigstens die erste Reaktionsmittelzuführung (70) zur Zuführung von Ammoniak, Harnstoff, deren Verbindungen oder Lösungen hieraus ausgebildet ist.

5. Vorrichtung nach einem der vorstehenden Ansprüche, **dadurch gekennzeichnet, dass** die Vorrichtung wenigstens einen ersten NOₓ-Analysator (80) aufweist.

6. Vorrichtung nach Anspruch 4 in Kombination mit Anspruch 5, **dadurch gekennzeichnet, dass** die Vorrichtung wenigstens eine Steuervorrichtung (90) aufweist, wobei die wenigstens eine erste Steuervorrichtung (90) zum Auslesen des wenigstens eines ersten NOₓ-Analysators (80) ausgebildet ist, wobei die wenigstens eine erste Steuervorrichtung (90) zum Ansteuern wenigstens einer ersten Reaktionsmittelzuführung (70) in Abhängigkeit von wenigstens einem ersten NOₓ-Analysators (80) erfassten NOₓ-Wertes durch Anpassung von Art und/oder Menge und/oder Konzentration des Reaktionsmittels ausgebildet ist.

7. Vorrichtung nach einem der vorstehenden Ansprüche, **dadurch gekennzeichnet, dass** die Vorrichtung wenigstens einen Temperatursensor aufweist.

8. Vorrichtung nach einem der Ansprüche 3 bis 6 in Kombination mit Anspruch 7, **dadurch gekennzeichnet, dass** die Vorrichtung wenigstens eine erste Steuervorrichtung (90) aufweist, wobei die wenigstens eine erste Steuervorrichtung (90) zum Auslesen des Temperatursensors ausgebildet ist, wobei die wenigstens eine erste Steuervorrichtung (90) zum Ansteuern wenigstens einer ersten Reaktionsmittelzuführung (70) und/oder wenigstens einer Hilfsbrennvorrichtung (60) und/oder wenigstens einer Wasserzuführung (62) in Abhängigkeit vom Temperatursensors erfassten Temperatur durch Anpassung von Art und/oder Menge und/oder Konzentration des Reaktionsmittels ausgebildet ist.

9. Vorrichtung nach einem der vorstehenden Ansprüche, **dadurch gekennzeichnet, dass** die Vorrichtung wenigstens einen NH₃-Analysator aufweist.

10. Vorrichtung nach einem der Ansprüche 3 bis 8 in Kombination mit Anspruch 9 **dadurch gekennzeichnet, dass** die Vorrichtung wenigstens eine Steuervorrichtung (90) aufweist, wobei die wenigstens eine erste Steuervorrichtung (90) zum Auslesen des wenigstens eines ersten NH₃-Analysators (82) ausgebildet ist, wobei die wenigstens eine erste Steuervorrichtung (90) zum Ansteuern von wenigstens einer ersten Reaktionsmittelzuführung (70) in Abhängigkeit von wenigstens einem ersten NH₃-Analysators (82) erfassten NH₃-Wertes durch Anpassung von Art und/oder Menge und/oder Konzentration des Reaktionsmittels ausgebildet ist.

11. Vorrichtung nach Anspruch 10, **dadurch gekennzeichnet, dass** die Reaktionsmittelzuführung an wenigstens einer Zugabestelle, vorzugsweise wenigstens zwei Zugabestellen, in wenigstens einer Höhen-Ebene, vorzugsweise in wenigstens zwei unterschiedlichen Höhen-Ebenen, angebracht ist/sind.

12. Vorrichtung nach einem der Ansprüche 3 bis 8, **dadurch gekennzeichnet, dass** die erste Reaktionsmittelzuführung (70) für eine Zuführung mit einem Druck von 0,5 bar bis 5 bar ausgelegt ist.

13. Vorrichtung nach einem der Ansprüche 3 bis 12, **dadurch gekennzeichnet, dass** benachbart zur erste Reaktionsmittelzuführung (70) wenigstens eine erste Wasserzuführung (62) angeordnet ist.

14. Vorrichtung nach einem der vorstehenden Ansprüche, **dadurch gekennzeichnet, dass** die Verweilzeitvorrichtung (50) eine Länge aufweist, sodass die Verweilzeit in der Verweilzeitvorrichtung (50) zwischen 0,5 s und 10 s, insbesondere zwischen 1 s und 5 s, besonders bevorzugt von 1,5 s bis 2,5 s, liegt.

15. Vorrichtung nach einem der vorstehenden Ansprüche, **dadurch gekennzeichnet, dass** zwischen dem Calcinator (20) und dem Materialkühler (30) eine Reduktionsvorrichtung (100) angeordnet ist.

16. Vorrichtung nach einem der vorstehenden Ansprüche, **dadurch gekennzeichnet, dass** die Verweilzeitvorrichtung (50) einen Katalysator aufweist.

17. Vorrichtung nach einem der vorstehenden Ansprüche, **dadurch gekennzeichnet, dass** die Verweilzeitvorrichtung (50) wenigstens eine Umlenkung und/oder Strömungseinbauten zur Gasmischung aufweist.

18. Vorrichtung nach einem der vorstehenden Ansprüche, **dadurch gekennzeichnet, dass** die Verweilzeitvorrichtung (50) wenigstens einer zweiten Reaktionsmittelzuführung (72) aufweist, wobei die zweite Reaktionsmittelzuführung (72) zwischen der Brennkammer (40) und der Verweilzeitvorrichtung (50) oder an der Verweilzeitvorrichtung (50) angeordnet ist.

19. Vorrichtung nach einem der vorstehenden Ansprüche, **dadurch gekennzeichnet, dass** die Vorrichtung einen katalytischen Reaktor aufweist, wobei der katalytische Reaktor im Gasstrom hinter dem Vorwärmer (10) angeordnet ist.

20. Verfahren zum Betreiben einer Vorrichtung nach einem der vorstehenden Ansprüche, **dadurch gekennzeichnet, dass** die Temperatur in der Verweilzeitvorrichtung (50) zwischen 750 °C und 1300 °C gewählt wird.

21. Verfahren nach Anspruch 20, **dadurch gekennzeichnet, dass** die Temperatur in der Verweilzeitvorrichtung (50) zwischen 900 °C und 1050 °C gewählt wird.

22. Verfahren nach einem der Ansprüche 20 bis 21, **dadurch gekennzeichnet, dass** eine thermische Behandlung von Tonen oder tonartigen Substanzen, erfolgt.

## Claims

1. A device for the thermal treatment of mineral materials, wherein the device comprises at least a preheater (10), a calciner (20) and a materials cooler (30), wherein a solids stream is guided into the preheater (10), from the preheater (10) into the calciner (20), from the calciner (20) into the materials cooler (30), and out of the materials cooler (30), wherein a gas stream is guided into the materials cooler (30), from the materials cooler (30) into the calciner (20), from the calciner (20) into the preheater (10), and out of the preheater (10), wherein the device comprises a combustion chamber (40), wherein the gas stream from the materials cooler (30) is guided at least partially through the combustion chamber (40) into the calciner (20), **characterized in that** a residence time device (50) is arranged between the combustion chamber (40) and the calciner (20), and so the combustion chamber (40) is arranged outside the solids stream.

2. The device as claimed in claim 1, **characterized in that** at least one auxiliary combustion device (60) is arranged between the combustion chamber (40) and the residence time device (50) and/or in the residence time device (50).

3. The device as claimed in either of the preceding claims, **characterized in that** a first reactant feed (70) is arranged between the combustion chamber (40) and the residence time device (50).

4. The device as claimed in claim 3, **characterized in that** at least the first reactant feed (70) is configured for the supply of ammonia, urea, compounds thereof or solutions of these.

5. The device as claimed in any of the preceding claims, **characterized in that** the device comprises at least one first NOₓ analyzer (80).

6. The device as claimed in claim 4 in combination with claim 5, **characterized in that** the device comprises at least one control device (90), wherein the at least one first control device (90) is configured for reading the at least one first NOₓ analyzer (80), wherein the at least one first control device (90) is configured for actuating at least one first reactant feed (70) in dependence on the NOₓ value detected by at least one first NOₓ analyzer (80) by adapting the type and/or amount and/or concentration of the reactant.

7. The device as claimed in any of the preceding claims, **characterized in that** the device comprises at least one temperature sensor.

8. The device as claimed in any of claims 3 to 6 in combination with claim 7, **characterized in that** the device comprises at least one first control device (90), wherein the at least one first control device (90) is configured for reading the temperature sensor, wherein the at least one first control device (90) is configured for actuating at least one first reactant feed (70) and/or at least one auxiliary combustion device (60) and/or at least one water feed (62) in dependence on the temperature detected by the temperature sensor by adapting the type and/or amount and/or concentration of the reactant.

9. The device as claimed in any of the preceding claims, **characterized in that** the device comprises at least one NH₃ analyzer.

10. The device as claimed in any of claims 3 to 8 in combination with claim 9, **characterized in that** the device comprises at least one control device (90), wherein the at least one first control device (90) is configured for reading the at least one first NH₃ analyzer (82), wherein the at least one first control device (90) is configured for actuating at least one first reactant feed (70) in dependence on the NH₃ value detected by at least one first NH₃ analyzer (82) by adapting the type and/or amount and/or concentration of the reactant.

11. The device as claimed in claim 10, **characterized in that** the reactant feed is mounted at at least one addition point, preferably at least two addition points, in at least one height plane, preferably in at least two different height planes.

12. The device as claimed in any of claims 3 to 8, **characterized in that** the first reactant feed (70) is designed for a feed with a pressure of 0.5 bar to 5 bar.

13. The device as claimed in any of claims 3 to 12, **characterized in that** at least one first water feed (62) is arranged adjacent to the first reactant feed (70).

14. The device as claimed in any of the preceding claims, **characterized in that** the residence time device (50) has a length, so that the residence time in the residence time device (50) is between 0.5 s and 10 s, more particularly between 1 s and 5 s, particularly preferably from 1.5 s to 2.5 s.

15. The device as claimed in any of the preceding claims, **characterized in that** a reduction device (100) is arranged between the calciner (20) and the materials cooler (30).

16. The device as claimed in any of the preceding claims, **characterized in that** the residence time device (50) comprises a catalyst.

17. The device as claimed in any of the preceding claims, **characterized in that** the residence time device (50) comprises at least one diversion and/or flow internals for the gas mixture.

18. The device as claimed in any of the preceding claims, **characterized in that** the residence time device (50) comprises at least one second reactant feed (72), wherein the second reactant feed (72) is arranged between the combustion chamber (40) and the residence time device (50) or at the residence time device (50).

19. The device as claimed in any of the preceding claims, **characterized in that** the device comprises a catalytic reactor, wherein the catalytic reactor is arranged in the gas stream downstream of the preheater (10).

20. A method for operating a device as claimed in any of the preceding claims, **characterized in that** the selected temperature in the residence time device (50) is between 750°C and 1300°C.

21. The method as claimed in claim 20, **characterized in that** the selected temperature in the residence time device (50) is between 900°C and 1050°C.

22. The method as claimed in any of claims 20 to 21, **characterized in that** a thermal treatment of clays or claylike substances takes place.

## Revendications

1. Dispositif pour le traitement thermique de matériaux minéraux, dans lequel le dispositif comprend au moins un préchauffeur (10), un calcinateur (20) et un refroidisseur de matériaux (30), dans lequel un flux de solides est guidé dans le préchauffeur (10), du préchauffeur (10) dans le calcinateur (20), du calcinateur (20) dans le refroidisseur de matériaux (30), et hors du refroidisseur de matériaux (30), dans lequel un flux de gaz est guidé dans le refroidisseur de matériaux (30), du refroidisseur de matériaux (30) dans le calcinateur (20), du calcinateur (20) vers le préchauffeur (10), et hors du préchauffeur (10), dans lequel le dispositif comprend une chambre de combustion (40), dans lequel le flux de gaz provenant du refroidisseur de matériaux (30) est guidé au moins partiellement à travers la chambre de combustion (40) vers le calcinateur (20), **caractérisé en ce qu'** , un dispositif de temps de séjour (50) est disposé entre la chambre de combustion (40) et le calcinateur (20), et **en ce que** la chambre de combustion (40) est disposée à l'extérieur du flux de solides.

2. Dispositif selon la revendication 1, **caractérisé en ce qu'**au moins un dispositif de combustion auxiliaire (60) est disposé entre la chambre de combustion (40) et le dispositif de temps de séjour (50) et/ou dans le dispositif de temps de séjour (50).

3. Dispositif selon l'une quelconque des revendications précédentes, **caractérisé en ce qu'**une première alimentation en réactif (70) est disposée entre la chambre de combustion (40) et le dispositif de temps de séjour (50).

4. Dispositif selon la revendication 3, **caractérisé en ce qu'**au moins la première alimentation en réactif (70) est configurée pour l'alimentation en ammoniac, en urée, en composés de ceux-ci ou en solutions de ceux-ci.

5. Dispositif selon l'une quelconque des revendications précédentes, **caractérisé en ce que** le dispositif comprend au moins un premier analyseur de NOₓ(80).

6. Dispositif selon la revendication 4 en combinaison avec la revendication 5, **caractérisé en ce que** le dispositif comprend au moins un dispositif de commande (90), dans lequel le au moins un premier dispositif de commande (90) est configuré pour lire le au moins un premier analyseur de NOₓ(80), dans lequel le au moins un premier dispositif de commande (90) est configuré pour actionner au moins une première alimentation en réactif (70) en fonction de la valeur_{de} NOₓdétectée par au moins un premier analyseur de NOₓ(80) en adaptant le type et/ou la quantité et/ou la concentration du réactif.

7. Dispositif selon l'une quelconque des revendications précédentes, **caractérisé en ce que** le dispositif comprend au moins un capteur de température.

8. Dispositif selon l'une quelconque des revendications 3 à 6 en combinaison avec la revendication 7, **caractérisé en ce que** le dispositif comprend au moins un premier dispositif de commande (90), dans lequel le au moins un premier dispositif de commande (90) est configuré pour lire le capteur de température, dans lequel le au moins un premier dispositif de commande (90) est configuré pour actionner au moins une première alimentation en réactif (70) et/ou au moins un dispositif de combustion auxiliaire (60) et/ou au moins une alimentation en eau (62) en fonction de la température détectée par le capteur de température en adaptant le type et/ou la quantité et/ou la concentration du réactif.

9. Le dispositif selon l'une quelconque des revendications précédentes, **caractérisé en ce que** le dispositif comprend au moins un analyseur de NH₃.

10. Le dispositif selon l'une quelconque des revendications 3 à 8 en combinaison avec la revendication 9, **caractérisé en ce que** le dispositif comprend au moins un dispositif de commande (90), dans lequel le au moins un premier dispositif de commande (90) est configuré pour lire le au moins un premier analyseur NH₃ (82), dans lequel le au moins un premier dispositif de commande (90) est configuré pour actionner au moins une première alimentation en réactif (70) en fonction de la valeur de NH₃ détectée par au moins un premier analyseur de NH₃ (82) en adaptant le type et/ou la quantité et/ou la concentration du réactif.

11. Dispositif selon la revendication 10, **caractérisé en ce que** l'alimentation en réactif est montée à au moins un point d'ajout, de préférence à au moins deux points d'ajout, dans au moins un plan de hauteur, de préférence dans au moins deux plans de hauteur différents.

12. Dispositif selon l'une quelconque des revendications 3 à 8, **caractérisé en ce que** la première alimentation en réactif (70) est conçue pour une alimentation avec une pression de 0,5 bar à 5 bars.

13. Dispositif selon l'une quelconque des revendications 3 à 12, **caractérisé en ce qu'**au moins une première alimentation en eau (62) est disposée à proximité de la première alimentation en réactif (70).

14. Dispositif selon l'une quelconque des revendications précédentes, **caractérisé en ce que** le dispositif de temps de séjour (50) a une longueur telle que le temps de séjour dans le dispositif de temps de séjour (50) est compris entre 0,5 s et 10 s, plus particulièrement entre 1 s et 5 s, de préférence entre 1,5 s et 2,5 s.

15. Dispositif selon l'une quelconque des revendications précédentes, **caractérisé en ce qu'**un dispositif de réduction (100) est disposé entre le calcinateur (20) et le refroidisseur de matériaux (30).

16. Dispositif selon l'une quelconque des revendications précédentes, **caractérisé en ce que** le dispositif de temps de séjour (50) comprend un catalyseur.

17. Le dispositif selon l'une quelconque des revendications précédentes, **caractérisé en ce que** le dispositif de temps de séjour (50) comprend au moins un élément de dérivation et/ou de déviation du flux pour le mélange gazeux.

18. Dispositif selon l'une quelconque des revendications précédentes, **caractérisé en ce que** le dispositif de temps de séjour (50) comprend au moins une deuxième alimentation en réactif (72), dans lequel la deuxième alimentation en réactif (72) est disposée entre la chambre de combustion (40) et le dispositif de temps de séjour (50) ou au niveau du dispositif de temps de séjour (50).

19. Dispositif selon l'une quelconque des revendications précédentes, **caractérisé en ce que** le dispositif comprend un réacteur catalytique, le réacteur catalytique étant disposé dans le flux de gaz en aval du préchauffeur (10).

20. Procédé pour faire fonctionner un dispositif selon l'une quelconque des revendications précédentes, **caractérisé en ce que,** dans I , la température sélectionnée dans le dispositif de temps de séjour (50) est comprise entre 750 °C et 1300 °C.

21. Procédé selon la revendication 20, **caractérisé en ce que I** , la température sélectionnée dans le dispositif de temps de séjour (50) est comprise entre 900 °C et 1050 °C.

22. Procédé selon l'une quelconque des revendications 20 à 21, **caractérisé en ce qu'**un traitement thermique d'argiles ou de substances argileuses a lieu.
